# EUROPÄISCHE PATENTSCHRIFT

(11) **EP 1 792 533 B1**
(45) Veröffentlichungstag und Bekanntmachung des Hinweises auf die Patenterteilung: **18.01.2012**
(21) Anmeldenummer: 06024088.4
(22) Anmeldetag: 21.11.2006
(51) Int. Cl.: A01G 3/053

(54) **Arbeitsgerät mit Griffeinheit**
Working implement with a handle assembly
Instrument de travail avec un dispositif de préhension

(30) Priorität: 05.12.2005 DE 102005058755
(43) Veröffentlichungstag der Anmeldung: 06.06.2007
(73) Patentinhaber: GARDENA Manufacturing GmbH, 89079 Ulm (DE)
(72) Erfinder: Reichart, Vincent, 89075 Ulm (DE)

(56) Entgegenhaltungen:
- EP-A2- 0 834 248

## Beschreibung

Die Erfindung betrifft ein handgeführtes Arbeitsgerät, insbesondere eine elektrisch betriebene Heckenschere, mit einer Griffeinheit, die zumindest zwei beabstandet voneinander angeordnete Griffteile zum beidhändigen Ergreifen des Arbeitsgeräts aufweist und die mit einem separat ausgeführten Motorgehäuse gekoppelt ist, an dem eine Arbeitseinrichtung, insbesondere eine Schneideinrichtung angebracht ist, wobei ein vorderes Griffteil benachbart zur Arbeitseinrichtung und ein hinteres Griffteil abgewandt von der Arbeitseinrichtung angeordnet sind.

Aus der EP 0 834 248 ist ein als motorbetriebene Teleskop-Heckenschere ausgeführtes Arbeitsgerät bekannt, das eine Handgriffanordnung zum Halten und Führen eines Arbeitskopfs aufweist. Der Arbeitskopf ist als separates Motorgehäuse ausgeführt und ist für die Aufnahme eines Antriebsmotors und eines daran angekoppelten Schneidwerkzeugs vorgesehen. Der Arbeitskopf ist von der Handgriffanordnung durch einen teleskopierbaren Stiel beabstandet und kann in unterschiedlichen Abständen relativ zu der Handgriffanordnung ein- und festgestellt werden sowie um eine zu dem Stiel senkrechte Achse geschwenkt werden. Die Handgriffanordnung weist zwei bügelförmige Griffteile auf, von denen ein hinteres, dem Schneidwerkzeug abgewandtes Griffteil in einer Ebene angeordnet ist, die parallel zu einer Längserstreckung der Heckenschere verläuft. Ein vorderes, dem Schneidwerkzeug zugewandtes Griffteil ist in einer Ebene angeordnet ist, die nahezu orthogonal zur Längserstreckung der Heckenschere ausgerichtet ist.

Die Aufgabe der Erfindung besteht darin, ein Arbeitsgerät zu schaffen, das eine benutzerfreundliche Handhabung in unterschiedlichen Arbeitssituationen ermöglicht.

Diese Aufgabe wird durch den kennzeichnenden Teil des Anspruchs 1 gelöst. Somit ist das vordere Griffteil trotz der separaten Gestaltung des Motorgehäuses nahe an der im Motorgehäuse durch den Antriebsmotor und die zugeordnete Arbeitseinrichtung bestimmten Masse angeordnet, die einen erheblichen Teil der Gesamtmasse des Arbeitsgeräts darstellt. Das vordere Griffteil wird durch die Anbringung an einem Verlängerungsabschnitt sehr nahe an den Schwerpunkt des Arbeitsgeräts herangeführt. Damit ist sichergestellt, dass nur ein geringer Hebelarm zwischen dem vorderen Griffteil und der im Motorgehäuse angeordneten Masse vorliegt, womit das Arbeitsgerät mit geringen Kräften sehr dynamisch bewegt werden kann und eine gute Handhabbarkeit für unterschiedliche Arbeitssituationen sichergestellt ist. Denn je kleiner der Hebelarm zwischen dem Griffteil und der zu bewegenden Masse ist, desto geringer ist auch die aufzubringende Kraft, um eine Lageänderung der Masse herbeizuführen. Erfindungsgemäß ist das vordere Griffteil bezogen auf eine Mittellängsachse der Griffeinheit zumindest abschnittsweise überlappend in Richtung der Arbeitseinrichtung vor dem Motorgehäuse angeordnet . Anders ausgedrückt überdeckt eine Projektion des vorderen Griffteils, die in orthogonaler Richtung zu einer längs der Griffeinheit erstreckten Mittellängsachse vorgenommen wird, eine in gleicher Richtung erfolgende Projektion des Motorgehäuses auf diese Projektionsachse zumindest teilweise. Bevorzugt schneidet eine Griffachse des vorderen Griffteils eine Querachse, die orthogonal zur Mittellängsachse der Griffeinheit ausgerichtet ist und die ihrerseits das Motorgehäuse schneidet. Das Griffteil ist typischerweise als stabförmige oder bügelförmige Griffeinrichtung ausgeführt, die zumindest eine oder mehrere Griffachsen aufweist. Bevorzugt ist eine Griffachse des vorderen Griffteils in einer Ebene angeordnet, die zumindest nahezu orthogonal zur Mittellängsachse der Griffeinheit ausgerichtet ist. Zumindest eine der Griffachsen schneidet eine Querachse, die lotrecht zur Mittellängsachse ausgerichtet ist und die auch das Motorgehäuse schneidet. Damit ist festgelegt, dass die Griffachse bei einer bevorzugten Ausführungsform der Erfindung zumindest bezogen auf eine Längserstreckung des Arbeitsgeräts in unmittelbarer Nachbarschaft des Motorgehäuses angeordnet ist, so dass eine vorteilhafte Handhabbarkeit des Arbeitsgeräts sichergestellt ist.

In weiterer Ausgestaltung der Erfindung ist vorgesehen, dass der Verlängerungsabschnitt Teil der Griffeinheit ist. Damit ist eine stabile, insbesondere spielfreie Anbringung des vorderen Griffteils an der Griffeinheit gewährleistet, so dass die im Betrieb des Arbeitsgeräts auftretenden Kräfte und Drehmomente nicht zu unerwünschten Deformationen oder Relativbewegungen des Verlängerungsabschnitts gegenüber der Griffeinheit führen. Durch derartige Relativbewegungen kann beim Benutzer ein unangenehmes Gefühl mangelnder Kontrolle über das Arbeitsgerät entstehen. Bei einer bevorzugten Ausführungsform der Erfindung ist der Verlängerungsabschnitt einstückig an der Griffeinheit angeordnet. Damit lässt sich neben einer vereinfachten Herstellung der Griffeinheit auch ein Montageschritt zur Anbringung des Verlängerungsabschnitts an der Griffeinheit einsparen. Zudem ist durch die einstückige Gestaltung eine besonders stabile Verbindung zwischen Verlängerungsabschnitt und Griffeinheit gewährleistet.

In weiterer Ausgestaltung der Erfindung ist vorgesehen, dass der Verlängerungsabschnitt beweglich an der Griffeinheit angeordnet ist. Damit kann eine vorteilhafte Einstellung der Position des am Verlängerungsabschnitt angebrachten vorderen Griffteils gegenüber der Griffeinheit und damit auch gegenüber dem Motorgehäuse vorgenommen werden. Dadurch wird eine benutzerindividuelle Anpassung an unterschiedliche Arbeitssituationen ermöglicht. Der Verlängerungsabschnitt kann schwenkbeweglich und/oder schiebebeweglich an der Griffeinheit angebracht sein. Dazu kann insbesondere ein Scharnier- oder Kugelgelenk für eine Schwenkbeweglichkeit des Verlängerungsabschnitts und/oder eine Linearführung zur translatorischen Verstellung des Verlängerungsabschnitts gegenüber der Griffeinheit vorgesehen sein.

In weiterer Ausgestaltung der Erfindung ist vorgesehen, dass für eine Verbindung des Motorgehäuses mit der Griffeinheit ein Schwenkgelenk vorgesehen ist, das eine Bewegung des Motorgehäuses in einem Funktionsschwenkbereich relativ zu den Griffteilen ermöglicht. Damit kann eine Einstellung einer Stellung des Motorgehäuses relativ zur Griffeinheit vorgenommen werden, um eine Anpassung des Arbeitsgeräts an unterschiedliche Arbeitssituationen zu ermöglichen. Das Schwenkgelenk kann mit einer Brems- und/oder Arretiereinrichtung versehen sein, um eine ungewollte Verschwenkung des Motorgehäuses im Betrieb des Arbeitsgeräts zu vermeiden. Das Schwenkgelenk kann derart zwischen der Griffeinheit und dem Motorgehäuse angeordnet werden, dass eine Schwenkachse des Schwenkgelenks orthogonal zur Mittellängsachse der Griffeinheit verläuft. Innerhalb des Funktionsschwenkbereichs kann eine stufenlose oder mit fester oder variabler Winkelteilung vorgesehene Arretierung des Motorgehäuses gegenüber der Griffeinheit vorgenommen werden. Zusätzlich zum Funktionsschwenkbereich, der zumindest zwei unterschiedliche Betriebstellungen des Motorgehäuses gegenüber der Griffeinheit aufweist, die für eine Benutzung des Arbeitsgeräts vorgesehen sind, kann zumindest eine Transportstellung vorgesehen sein, in der das Motorgehäuse kompakt an die Griffeinheit angelegt werden kann und somit eine raumsparende Lagerung des Arbeitsgeräts ermöglicht. In der Transportstellung kann eine Unterbrechung einer Energiezufuhr und/oder eine mechanische Blockierung des Antriebsmotors und/oder der Arbeitseinrichtung vorgesehen sein, um ein ungewolltes Einschalten des Arbeitsgeräts zu verhindern.

In weiterer Ausgestaltung der Erfindung ist vorgesehen, dass für eine Verbindung des Motorgehäuses mit der Griffeinheit eine Teleskopeinrichtung vorgesehen ist, die eine translatorische Veränderung einer Beabstandung zwischen dem Motorgehäuse und der Griffeinheit in einem Translationsbereich ermöglicht. Damit kann eine Anpassung des Arbeitsgeräts auf unterschiedliche Arbeitssituationen vorgenommen werden. Die Teleskopeinrichtung kann insbesondere aus mehreren teleskopierbar ineinander steckbaren Profilabschnitten aufgebaut sein, um eine Positionierung des Motorgehäuses in unmittelbarer Nähe der Griffeinheit ebenso wie eine Positionierung in einer Entfernung von der Griffeinheit zu ermöglichen. Bei einer bevorzugten Ausführungsform ermöglicht die Teleskopeinrichtung eine Beabstandung des Motorgehäuses von der Griffeinrichtung mit einem maximalen Abstand, der zumindest nahezu einer Längserstreckung der Griffeinheit entspricht. Die Teleskopeinrichtung kann an der Griffeinheit angebracht sein oder in diese integriert sein. Bei einer bevorzugten Ausführungsform der Erfindung ist vorgesehen, dass eine Mündungsöffnung für die Teleskopeinrichtung in Richtung der Arbeitseinrichtung hinter dem vorderen Griffteil angeordnet ist. Die an oder in der Griffeinheit angebrachte Teleskopeinrichtung weist eine dem hinteren Griffteil zugeordnete Führungseinrichtung auf, die als Schiebeführung für zumindest einen Profilabschnitt ausgeführt ist. Die an der Führungseinrichtung vorgesehene Öffnung zum Einschieben des zumindest einen Profilabschnitts wird als Mündungsöffnung bezeichnet. Durch eine Anordnung der Mündungsöffnung der Teleskopeinrichtung in Richtung der Arbeitseinrichtung hinter dem vorderen Griffteil, dass heißt im Bezug auf die Mittellängsachse zwischen dem vorderen und dem hinteren Griffteil, kann eine vorteilhafte Kraft- und Schwingungseinleitung vom Motorgehäuse auf die Griffeinheit erzielt werden. Die Einleitung von Kräften, die bei der Benutzung der Arbeitseinrichtung entstehen, erfolgt bei einer derartigen Anordnung der Teleskopeinrichtung im Wesentlichen symmetrisch zu den Griffteilen.

In weiterer Ausgestaltung der Erfindung ist vorgesehen, dass das Schwenkgelenk und die Teleskopeinrichtung funktional miteinander kombiniert sind. Damit kann das Motorgehäuse schwenkbar und teleskopierbar gegenüber der Griffeinheit bewegt werden, wodurch ein besonders großer Einsatzbereich der Arbeitseinrichtung für unterschiedlichste Arbeitssituationen sichergestellt ist.

In weiterer Ausgestaltung der Erfindung ist vorgesehen, dass das vordere Griffteil an einem als Verlängerungsabschnitt dienenden Trägerarm vorgesehen ist, der in einem spitzen Winkel zu einer Mittelängsachse der Griffeinheit ausgerichtet ist. Durch die Anbringung des Griffteils an dem Trägerarm kann neben der kompakten Gestaltung des Arbeitsgeräts auch eine verbesserte Schwingungsentkopplung der Griffeinheit für Schwingungen verwirklicht werden. Schwingungen treten beim Betrieb des Arbeitsgeräts auf und können bei durchgängiger oder länger andauernder Benutzung zu einer unerwünschten Belastung des Benutzers führen. Die Distanz zwischen der Schwingungsquelle, insbesondere dem im Motorgehäuse aufgenommenen Antriebsmotor sowie der zugeordneten Arbeitseinrichtung und den für eine Schwingungsübertragung auf den Benutzer maßgeblichen Griffteilen, insbesondere dem vorderen Griffteil, das über den als Trägerarm ausgeführten Verlängerungsabschnitt angekoppelt ist, ist erheblich größer als bei einer direkten Kopplung des vorderen Griffteils an das Motorgehäuse. Somit müssen die Schwingungen einen längeren Weg zwischen dem Motorgehäuse und der Griffeinheit zurücklegen und können längs dieses Weges zumindest teilweise durch die Dampfungseigenschaften der verwendeten Materialien verringert werden. Der Trägerarm kann besonders gute schwingungsdämpfende Eigenschaften durch die Verwendung schwingungsdämpfender Materialien und/oder durch den Anbau mechanischer Schwingungsdämpfer aufweisen. Bevorzugt ist der Trägerarm als schlanker, rohrförmiger Fortsatz der Griffeinheit ausgeführt und trägt in einem der Griffeinheit abgewandten Endbereich das vordere Griffteil. Eine Längsachse des Trägerarms und die Mittellängsachse der Griffeinheit schließen einen Winkel von weniger als 45 Grad, bevorzugt weniger als 30 Grad, besonders bevorzugt weniger als 20 Grad ein. Eine Länge des Trägerarms beträgt zumindest 15 %, bevorzugt zumindest 25 %, besonders bevorzugt zumindest 35 % einer Gesamtlänge der Griffeinheit.

In weiterer Ausgestaltung der Erfindung ist vorgesehen, dass die Griffeinheit in montiertem Funktionszustand einstückig, insbesondere aus zwei jeweils einteiligen Gehäusehalbschalen, gestaltet ist. Damit kann eine kostengünstige Herstellung, insbesondere im Kunststoffspritzgussverfahren, und eine einfache Montage der Griffeinheit gewährleistet werden. Vorteilhaft ist insbesondere die einteilige Anformung sowohl des vorderen als auch des hinteren Griffteils an den jeweiligen Gehäusehalbschalen, die neben den montagetechnischen Vorteilen auch eine besonders stabile Gestaltung der Griffteile und damit der Griffeinheit erlauben.

In weiterer Ausgestaltung der Erfindung ist vorgesehen, dass der Funktionsschwenkbereich des Schwenkgelenks in der kompakt abgelegten Stauposition der Teleskopeinrichtung zumindest 150 Grad, bevorzugt 180 Grad beträgt. Damit kann das Motorgehäuse auch bei vollständig eingeschobener Teleskopeinrichtung, also in der kompaktesten Anordnung gegenüber der Griffeinheit, in unterschiedliche Funktionsstellungen gebracht werden. Somit kann das Arbeitsgerät auch besonders vorteilhaft an Arbeitssituationen angepasst werden, wie sie bei bekannten, typischerweise nicht teleskopierbaren Arbeitsgeräten, insbesondere bei Heckenscheren oder Kettensägen auftreten können. Darin liegt ein erheblicher Vorteil gegenüber der teleskopierbaren Heckenschere nach dem Stand der Technik, die in der kompakten Stauposition eine deutlich von konventionellen Heckenscheren abweichende Bedienung aufweist.

In weiterer Ausgestaltung der Erfindung ist vorgesehen, dass das vordere Griffteil bei horizontaler Ausrichtung der Arbeitseinrichtung zumindest nahezu lotrecht oberhalb eines Schwerpunkts des Arbeitsgeräts angeordnet ist. Damit ist eine kraftsparende Bedienung des Arbeitsgeräts sichergestellt, da sich das Arbeitsgerät bei Ergreifen des vorderen Griffteils in einer im Wesentlichen horizontalen Lage auspendelt und durch Aufbringung von Kräften auf das hintere Griffteil ohne große Mühe aus der horizontalen Lage ausgelenkt werden kann. Bei einer bevorzugten Ausführungsform der Erfindung ist die Griffachse des vorderen Griffteils in einem Bereich um eine Lotachse, die orthogonal die Mittellängsachse der Griffeinheit und einen Schwerpunkt des Arbeitsgeräts schneidet, angeordnet, dessen Breite weniger als 20 % der Erstreckung der Griffeinheit längs der Mittellängsachse beträgt. Bei einer besonders bevorzugten Ausführungsform beträgt die Breite des Bereichs weniger als 10 % der Erstreckung der Griffeinheit längs der Mittellängsachse.

Weitere Vorteile und Merkmale der Erfindung ergeben sich aus den Ansprüchen sowie aus der nachfolgenden Beschreibung eines bevorzugten Ausführungsbeispiels, das anhand der Zeichnungen dargestellt ist. Dabei zeigt:
- Fig. 1: eine perspektivische Darstellung eines als Heckenschere ausgeführten Arbeitsgeräts,
- Fig. 2: eine schematische Seitenansicht des Arbeitsgeräts gemäß der Fig. 1 in einer kompakt abgelegten Stauposition,
- Fig. 3: eine schematische Seitenansicht des Arbeitsgeräts gemäß der Fig. 1 und 2 in einer teleskopierten und verschwenkten Funktionsposition.

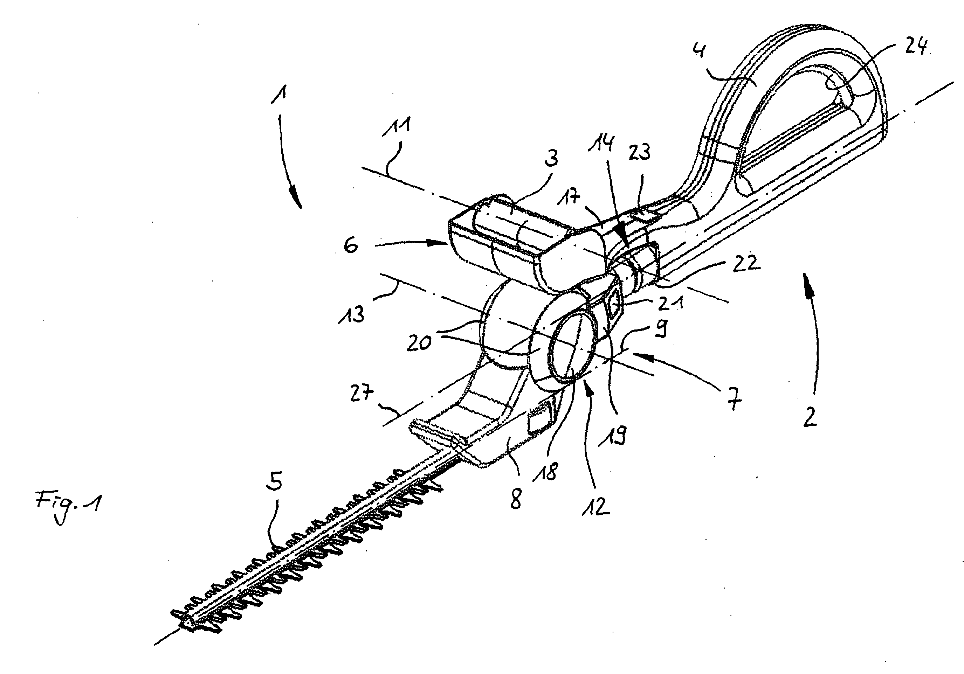

Bei dem in den Figuren 1 bis 3 dargestellten Arbeitsgerät 1 handelt es sich um eine teleskopierbare Heckenschere, die eine Griffeinheit 2 mit einem vorderen Griffteil 3 und einem hinteren Griffteil 4 aufweist. Das Arbeitsgerät 1 kann in der Art der Patentanmeldungen DE 10 2005 053 416 und DE 10 2005 053 420 ausgeführt sein, die mit den dort offenbarten Merkmalen hiermit ausdrücklich zum Bestandteil der Offenbarung gemacht werden. Die Griffeinheit 2 ist mittels einer Teleskopeinrichtung 14 und einem Schwenkgelenk 12 mit einem separat ausgeführten Motorgehäuse 8 verbunden. An dem Motorgehäuse 8 ist eine als Messerblatt mit zwei gegenläufigen Messern ausgeführte Arbeitseinrichtung 5 angebracht, deren Längsachse 9 sich geradlinig parallel zu einer Mittellängsachse 27 der Griffeinheit 2 erstreckt. In dem Motorgehäuse 8 ist ein nicht dargestellter Antriebsmotor, insbesondere ein Elektromotor, sowie eine ebenfalls nicht dargestellte Getriebeeinrichtung, die für eine Umsetzung einer Rotationsbewegung des Elektromotors in eine oszillierende Translationsbewegung der Messer an der Arbeitseinrichtung vorgesehen ist, untergebracht. Das Motorgehäuse 8 ist als separate Gehäusebaugruppe aus zwei nicht näher dargestellten Gehäusehalbschalen hergestellt und kann als unabhängige Baugruppe mit dem Antriebsmotor und der Arbeitseinrichtung versehen und einzeln auf Funktion geprüft werden.

Das Motorgehäuse 8 ist in einem der Griffeinheit 2 zugewandten hinteren Abschnitt bereichsweise kugelfömig gestaltet und weist an Seitenflächen jeweils im Wesentlichen zylindrisch gestaltete Gelenkzapfen 18 auf und ist mit einer Gelenkgabel 19 gekoppelt, die in Endbereichen ringförmige Zapfenaufnahmen 20 aufweist. Die Zapfenaufnahmen 20 umgreifen die Gelenkzapfen 18 formschlüssig und bilden damit das Schwenkgelenk 12, das eine schwenkbare Gelenkverbindung zwischen dem Motorgehäuse 8 und der Gelenkgabel 19 verwirklicht. Mittels des Schwenkgelenks 12 kann das Motorgehäuse 8 in einem Funktionsschwenkbereich um eine Schwenkachse 13 verschwenkt werden, die koaxial zu Mittelachsen der Gelenkzapfen 18 und Zapfenaufnahmen 20 und orthogonal zur Mittellängsachse 27 ausgerichtet ist.

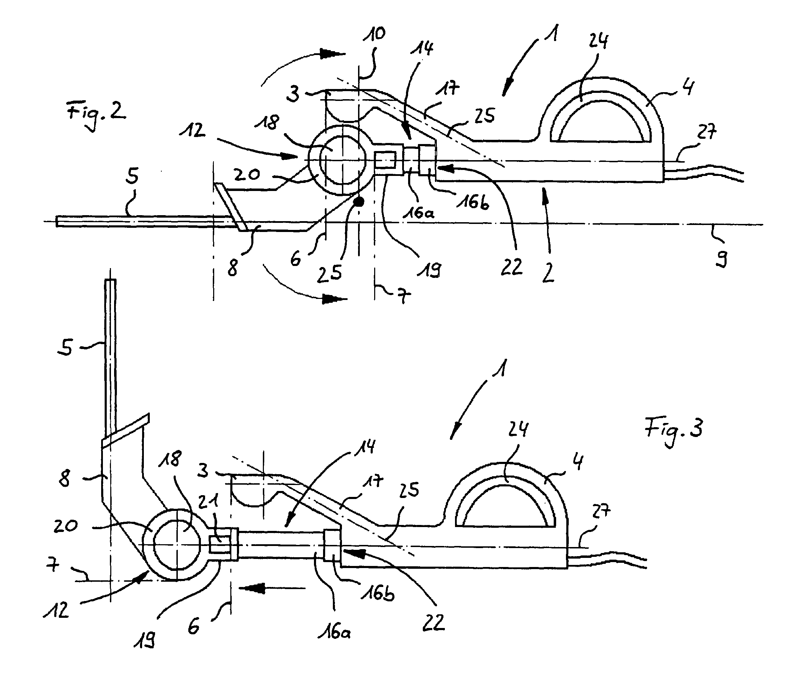

Der Funktionsschwenkbereich überdeckt in der in den Fig. 1 und 2 dargestellten Ruheposition einen Winkelbereich von ungefähr 180 Grad, dass heißt, dass das Motorgehäuse 8 mit der angebrachten Arbeitseinrichtung 5 bei vollständig eingefahrener Teleskopeinrichtung 14 ungefähr um jeweils 90 Grad in und gegen den Uhrzeigersinn um die Schwenkachse 13 verschwenkt werden kann. Bei der Funktionsstellung gemäß der Fig. 3 könnte insbesondere in Richtung des vorderen Griffteils 3 ein größerer Schwenkbereich vorgesehen werden, dies ist jedoch aus Sicherheitsgründen nicht der Fall. Somit stellt die in Fig. 3 dargestellte, in vertikaler Richtung nach oben ausgerichtete Stellung des Motorgehäuses 8 die Endstellung der Arbeitseinrichtung 5 für die Schwenkbewegung um die Schwenkachse 13 in Richtung des vorderen Griffteils 3 und hinsichtlich der Darstellung der Fig. 2 und 3 die Endstellung für die Schwenkbewegung der Arbeitseinrichtung 5 im Uhrzeigersinn dar.

Bei einer Ausführung des Antriebsmotors als Elektromotor kann eine Übertragung elektrischer Energie zwischen der Gelenkgabel 19 und dem Motorgehäuse 8 beispielsweise über eine flexible Kabelverbindung oder über eine Schleiferanordnung vorgesehen sein. Für eine Arretierung des Schwenkgelenks 12 ist eine nicht näher dargestellte, formschlüssig wirkende Arretiereinrichtung vorgesehen, die über eine in der Gelenkgabel 19 vorgesehene Entriegelungstaste 21 angesteuert werden kann und die eine Arretierung des Motorgehäuses 8 relativ zur Griffeinheit 2 mit einer insbesondere konstanten Winkelteilung über den gesamten Funktionsschwenkbereich ermöglicht.

Die Gelenkgabel 19, die aus zwei Gehäusehalbschalen aufgebaut ist, weist in einem der Arbeitseinrichtung 5 abgewandten Endbereich an einer Hinterseite einen nicht näher dargestellten Verbindungszapfen auf, der für eine Steckverbindung mit einem Profilabschnitt 16a der Teleskopeinrichtung 14 vorgesehen ist. Die Teleskopeinrichtung 14 weist zwei ineinander geschobene, aus profilierten Rohrabschnitten hergestellte Profilabschnitte 16a, 16b auf. Der der Arbeitseinrichtung 5 zugewandte Profilabschnitt 16a ist mit einem kleineren Profilquerschnitt versehen und kann daher in den mit einem größeren Profilquerschnitt versehenen Profilabschnitt 16b eingeschoben werden. Der Profilabschnitt 16b ist schiebebeweglich in der Griffeinheit 2 gelagert und kann aus der in den Fig. 1 bis 3 dargestellten Ruheposition in eine nicht dargestellte teleskopierte Funktionsposition aus der Griffeinheit 2 längs der Mittellängsachse 27 ausgeschoben werden. Damit ist eine Längenverstellung des Arbeitsgeräts 1 möglich, bei der eine Beabstandung des Motorgehäuses 8 zur Griffeinheit 2 verändert werden kann, um eine Anpassung des Arbeitsgeräts 1 auf unterschiedliche Arbeitssituationen zu ermöglichen. Für eine Arretierung der Teleskopeinrichtung 14 ist oberhalb einer der Griffeinheit 2 zugeordneten Mündungsöffnung 22, aus der der Profilabschnitt 16b aus der Griffeinheit 2 ausgeschoben werden kann, eine Betätigungstaste 23 vorgesehen, die bei Betätigung eine Teleskopierung der Teleskopeinrichtung 14 ermöglicht und die ansonsten die Teleskopeinrichtung 14 arretiert.

Das hintere Griffteil 4 ist einteilig an der aus zwei nicht näher dargestellten Gehäusehalbschalen ausgeführten Griffeinheit 2 angeformt und weist eine im Wesentlichen ringabschnittsförmige Gestaltung auf. An einer radial nach innen gewandten Innenfläche des Griffteils 4 ist eine ebenfalls ringabschnittsförmige Steuertaste 24 vorgesehen, die relativbeweglich zum Griffteil 4 angebracht ist und die mit einer nicht dargestellten Steuereinrichtung gekoppelt ist. Die Steuereinrichtung ist für eine Beeinflussung einer dem Antriebsmotor zur Verfügung zu stellenden Energiemenge vorgesehen, so dass mittels der Steuertaste 24 der Antriebsmotor in Betrieb genommen und gegebenenfalls in seiner Drehzahl beeinflusst werden kann. Die Steuertaste 24 ist zur Sicherstellung einer zweihändigen Bedienung des Arbeitsgeräts 1 mit einer dem vorderen Griffteil 3 zugeordneten, nicht dargestellten Sperrtaste gekoppelt, die von einem Benutzer betätigt werden muss, um eine Betätigung der Steuertaste 24 zu ermöglichen. Durch die einstückige Gestaltung der Griffeinheit 2 mit dem vorderen Griffteil 3 und dem hinteren Griffteil 4 kann eine einfache und kostengünstige Kopplung der Sperrtaste mit der Steuertaste 24 verwirklicht werden, da die Griffteile 3, 4 nicht relativbeweglich zueinander ausgeführt sind.

Das vordere Griffteil 3 ist an einem als Verlängerungsabschnitt dienenden im Wesentlichen stabförmig ausgeführten Trägerarm 17 angebracht, der in etwa oberhalb der Mündungsöffnung 22 der Teleskopeinrichtung 14 an der Griffeinheit 2 angebracht ist. Eine Längsachse 25 des Trägerarms 17 ist in einem spitzen Winkel zu einer Mittellängsachse 27 der Griffeinheit 2 ausgerichtet. Damit kann eine Anordnung des vorderen Griffteils 3 in unmittelbarer Nachbarschaft zum Motorgehäuse 8 verwirklicht werden, ohne dass das vordere Griffteil 3 direkt an dem Motorgehäuse 8 angebracht ist. Das vordere Griffteil 3 ist bezogen auf die Mittellängsachse 27 in Richtung der Arbeitseinrichtung 5 vor einer Hinterkante 7 des abschnittsweise kugelförmig ausgeführten Motorgehäuses 8 angeordnet, dass heißt, dass eine Projektion des vorderen Griffteils 3 auf die Mittellängsachse 27 eine Projektion des Motorgehäuses 8 auf die Mittellängsachse 27 zumindest teilweise überdeckt. Dies gilt zumindest für die in den Fig. 1 und 2 dargestellte, kompakt abgelegte Stauposition des Arbeitsgeräts 1. Durch eine derartige Anordnung des vorderen Griffteils 3 bezogen auf das Motorgehäuse 8 kann erreicht werden, dass eine Griffachse 11 des als Stabgriff ausgeführten vorderen Griffteils 3 bei waagerechter Ausrichtung des Arbeitsgeräts 1 zumindest nahezu lotrecht, also in vertikaler Richtung oberhalb eines Schwerpunkts 26 des Arbeitsgeräts 1 angeordnet ist, so dass sich das Arbeitsgerät 1 beim Ergreifen des vorderen Griffteils 3 durch einen Benutzer und ohne Ausübung weiterer Kräfte zumindest nahezu horizontal auspendelt. Dabei ist sichergestellt, dass eine auch als Vorderkante 6 zu bezeichnende Außenkante des vorderen Griffteils 3 in Richtung der Arbeitseinrichtung 5 vor der Hinterkante 7 des Motorgehäuses 8 zu liegen kommt.

Eine orthogonal zur Mittellängsachse 27 verlaufende Querachse 10, die eine dem vorderen Griffteil 3 zugeordnete Griffachse 11 schneidet, ist für das erfindungsgemäße Arbeitsgerät 1 in einem Griffbereich angeordnet, der zumindest in Richtung der Griffeinheit, insbesondere des hinteren Griffteils, durch die Bedingung begrenzt wird, dass die Querachse 10 das Motorgehäuse 8 schneidet. Entscheidend ist, dass sich der Griffbereich von einer der Arbeitseinrichtung 5 abgewandten Hinterfläche 7 des Motorgehäuses 8 in Richtung der Arbeitseinrichtung 5 nach vorne erstreckt. In dieser Richtung kann der Griffbereich mit einer der Arbeitseinrichtung 5 zugewandten Vorderseite des Motorgehäuses 8 enden oder bei entsprechender Gestaltung des Motorgehäuses 8 und/oder des vorderen Griffteils auch darüber hinaus erstreckt sein.

Bei einer nicht dargestellten Ausführungsform ist vorgesehen, dass zumindest das vordere Griffteil relativbeweglich an dem Trägerarm angebracht ist und somit in Abhängigkeit von der Arbeitssituation verschwenkt werden kann. Zu diesem Zweck kann eine Gelenkeinrichtung vorgesehen sein, die als Zapfengelenk oder als Kugelgelenk ausgeführt werden kann und die eine Verschwenkung des Griffteils um eine oder um mehrere Schwenkachsen ermöglicht.

## Patentansprüche

1. Handgeführtes Arbeitsgerät (1), insbesondere Heckenschere, mit einer Griffeinheit (2), die zumindest zwei beabstandet voneinander angeordnete Griffteile (3, 4) zum beidhändigen Ergreifen des Arbeitsgeräts aufweist und die mit einem separat ausgeführten Motorgehäuse (8) gekoppelt ist, an dem eine Arbeitseinrichtung (5), insbesondere eine Schneideinrichtung angebracht ist, wobei ein vorderes Griffteil (3) benachbart zur Arbeitseinrichtung (5) und ein hinteres Griffteil (4) abgewandt von der Arbeitseinrichtung (5) angeordnet ist, wobei das vordere Griffteil an einem Verlängerungsabschnitt (17) angeordnet ist, der das Griffteil (3) in Richtung der Arbeitseinrichtung (5) nach vorne verlagert, **dadurch gekennzeichnet, dass** eine Projektion des vorderen Griffteils (3), die in orthogonaler Richtung zu einer längs der Griffeinheit (2) erstreckten Mittellängsachse (27) vorgenommen wird, eine in gleicher Richtung erfolgende Projektion des Motorgehäuses (8) auf diese Projektionsachse zumindest teilweise überdeckt.

2. Handgeführtes Arbeitsgerät nach Anspruch 1, **dadurch gekennzeichnet, dass** der Verlängerungsabschnitt (17) Teil der Griffeinheit (2) ist und insbesondere einstückig an der Griffeinheit (2) angeordnet ist.

3. Handgeführtes Arbeitsgerät nach Anspruch 1, **dadurch gekennzeichnet, dass** der Verlängerungsabschnitt (17) beweglich an der Griffeinheit (2) angeordnet ist.

4. Handgeführtes Arbeitsgerät nach Anspruch 1, **dadurch gekennzeichnet, dass** für eine Verbindung des Motorgehäuses (8) mit der Griffeinheit (2) ein Schwenkgelenk (12) vorgesehen ist, das eine Bewegung des Motorgehäuses (8) in einem Funktionsschwenkbereich relativ zu den Griffteilen (3, 4) ermöglicht.

5. Handgeführtes Arbeitsgerät nach Anspruch 1, **dadurch gekennzeichnet, dass** für eine Verbindung des Motorgehäuses (8) mit der Griffeinheit (2) eine Teleskopeinrichtung (14) vorgesehen ist, die eine translatorische Veränderung einer Beabstandung zwischen dem Motorgehäuse (8) und der Griffeinheit (2) in einem Translationsbereich ermöglicht.

6. Handgeführtes Arbeitsgerät nach Anspruch 4 und 5, **dadurch gekennzeichnet, dass** das Schwenkgelenk (12) und die Teleskopeinrichtung (14) funktional miteinander kombiniert sind.

7. Handgeführtes Arbeitsgerät nach Anspruch 1, **dadurch gekennzeichnet, dass** das vordere Griffteil (3) an einem als Verlängerungsabschnitt dienenden Trägerarm (17) vorgesehen ist, der in einem spitzen Winkel zu einer Mittellängsachse (27) der Griffeinheit (2) ausgerichtet ist.

8. Handgeführtes Arbeitsgerät nach Anspruch 4, **dadurch gekennzeichnet, dass** die Griffeinheit (2) im montierten Funktionszustand einstückig, insbesondere aus zwei jeweils einteiligen Gehäusehalbschalen gestaltet ist.

9. Handgeführtes Arbeitsgerät nach Anspruch 5, **dadurch gekennzeichnet, dass** der Funktionsschwenkbereich des Schwenkgelenks (12) in der kompakt abgelegten Stauposition der Teleskopeinrichtung (14) zumindest 150 Grad, bevorzugt 180 Grad beträgt.

10. Handgeführtes Arbeitsgerät nach einem der vorhergehenden Ansprüche, **dadurch gekennzeichnet, dass** das vordere Griffteil (3) bei horizontaler Ausrichtung der Arbeitseinrichtung zumindest nahezu lotrecht oberhalb eines Schwerpunkts (26) des Arbeitsgeräts angeordnet ist.

## Claims

1. A hand-guided working appliance (1), in particular a hedge trimmer, with a gripping unit (2), which has at least two gripping portions (3, 4) positioned apart from each other for grasping the working appliance with both hands and which is coupled to a separately made motor casing (8), onto which a working device (5), in particular a cutting device, is mounted, wherein a front gripping portion (3) is positioned adjacent to the working device (5) and a rear gripping portion (4) turned away from the working device (5), **characterized in that** the front gripping portion is positioned on an extension section (17) which moves the gripping portion (3) forwards in the direction of the working device (5).

2. The hand-guided working appliance according to claim 1, **characterized in that** the extension section (17) is part of the gripping unit (2) and is in particular positioned as a single piece on the gripping unit (2).

3. The hand-guided working appliance according to claim 1, **characterized in that** the extension section (17) is movably positioned on the gripping unit (2).

4. The hand-guided working appliance according to claim 1, **characterized in that**, for connecting the motor casing (8) to the gripping unit (2), a pivot joint (12) is provided which enables a movement of the motor casing (8) in a functional pivoting range relatively to the gripping portions (3, 4).

5. The hand-guided working appliance according to claim 1, **characterized in that**, for connecting the motor casing (8) to the gripping unit (2), a telescopic device (14) is provided, which enables translational modification of a distance between the motor casing (8) and the gripping unit (2) in a translation range.

6. The hand-guided working appliance according to claims 4 and 5, **characterized in that** the pivot joint (12) and the telescopic device (14) are functionally combined with each other.

7. The hand-guided working appliance according to claim 1, **characterized in that** the front gripping portion (3) is provided on a bearing arm (17) used as an extension section which is oriented at an acute angle with respect to a median longitudinal axis (27) of the gripping unit (2).

8. The hand-guided working appliance according to claim 4, **characterized in that** the gripping unit (2) in the functionally mounted condition is designed as a single piece, in particular consisting of two one-piece casing half-shells.

9. The hand-guided working appliance according to claim 5, **characterized in that** the functional pivoting range of the pivot joint (12) in the stowage position for compactly storing the telescopic device (14) is of at least 150 degrees, preferably 180 degrees.

10. The hand-guided working appliance according to one of the preceding claims, **characterized in that** the front gripping portion (3) upon horizontal orientation of the working device is at least approximately positioned plumb above a center of gravity (26) of the working appliance.

## Revendications

1. Instrument de travail guidé à la main (1), en particulier un taille-haie, avec un dispositif de préhension (2), qui présente au moins deux parties de préhension (3, 4) disposées espacées l'une de l'autre pour la saisie à deux mains de l'instrument de travail et qui est couplé à un carter de moteur (8) réalisé séparément, sur lequel est monté un dispositif de travail (5), en particulier un dispositif de coupe, une partie de préhension avant (3) étant disposée adjacente au dispositif de travail (5) et une partie de préhension arrière (4) éloignée du dispositif de travail (5), **caractérisé en ce que** la partie de préhension avant est disposée sur une section de prolongement (17) qui déplace la partie de préhension (3) vers l'avant en direction du dispositif de travail (5).

2. Instrument de travail guidé à la main selon la revendication 1, **caractérisé en ce que** la section de prolongement (17) fait partie du dispositif de préhension (2) et est en particulier disposée d'un seul tenant sur le dispositif de préhension (2).

3. Instrument de travail guidé à la main selon la revendication 1, **caractérisé en ce que** la section de prolongement (17) est disposée de manière mobile sur le dispositif de préhension (2).

4. Instrument de travail guidé à la main selon la revendication 1, **caractérisé en ce qu'**est prévue, pour une connexion du carter de moteur (8) au dispositif de préhension (2), une articulation pivotante (12) qui permet un mouvement du carter de moteur (8) dans une plage de pivotement fonctionnelle par rapport aux parties de préhension (3, 4).

5. Instrument de travail guidé à la main selon la revendication 1, **caractérisé en ce qu'**est prévu, pour une connexion du carter de moteur (8) au dispositif de préhension (2), un dispositif télescopique (14), qui permet un changement en translation d'un écartement entre le carter de moteur (8) et le dispositif de préhension (2) dans une plage de translation.

6. Instrument de travail guidé à la main selon les revendications 4 et 5, **caractérisé en ce que** l'articulation pivotante (12) et le dispositif télescopique (14) sont combinés l'un avec l'autre de manière fonctionnelle.

7. Instrument de travail guidé à la main selon la revendication 1, **caractérisé en ce que** la partie de préhension avant (3) est prévue sur un bras de support (17) servant de section de prolongement qui est orienté suivant un angle aigu par rapport à un axe longitudinal médian (27) du dispositif de préhension (2).

8. Instrument de travail guidé à la main selon la revendication 4, **caractérisé en ce que** le dispositif de préhension (2), à l'état de fonctionnement monté, est conçu d'un seul tenant, en particulier à partir de deux demi-coques de boîtier respectivement d'une seule pièce.

9. Instrument de travail guidé à la main selon la revendication 5, **caractérisé en ce que** la plage de pivotement fonctionnelle de l'articulation pivotante (12) dans la position de rangement pour l'entreposage de manière compacte du dispositif télescopique (14) est d'au moins 150 degrés, de préférence de 180 degrés.

10. Instrument de travail guidé à la main selon l'une des revendications précédentes, **caractérisé en ce que** la partie de préhension avant (3) est disposée en cas d'orientation horizontale du dispositif de travail au moins presque verticalement au-dessus d'un centre de gravité (26) de l'instrument de travail.
